# EUROPÄISCHE PATENTANMELDUNG

(11) **EP 4 763 476 A1**
(43) Veröffentlichungstag der Anmeldung: **24.06.2026**
(21) Anmeldenummer: 25224704.4
(22) Anmeldetag: 17.12.2025
(51) Int. Cl.: B29C 59/00, B29C 59/02, B29C 59/04, B29C 44/56, E04F 15/18, E04F 15/20

(54) **VERFAHREN ZUR HERSTELLUNG EINES TRITTSCHALLELEMENTES, VORRICHTUNG ZUR DURCHFÜHRUNG DES VERFAHRENS SOWIE TRITTSCHALLELEMENT**

(30) Priorität: 20.12.2024 DE 102024004452
(71) Anmelder: Gonon Isolation AG, 8226 Schleitheim (CH)
(72) Erfinder: AMANN, Jochen, 79805 Eggingen (DE); KIND, Michael, 8472 Seuzach (CH)
(74) Vertreter: Patentanwälte Jackisch-Kohl und Kohl

(57) **Zusammenfassung**

Das Verfahren dient zur Herstellung eines plattenförmigen Trittschallelementes (3), das eine Oberseite und eine Unterseite aufweist. Damit bei dem Verfahren, der Vorrichtung und dem Trittschallelement (3) die Trittschalldämmung in einfacher Weise erhöht werden kann, weist das Trittschallelement (3) an seiner Ober- und/oder seiner Unterseite einen Auflagebereich auf, der kleiner ist als die Gesamtfläche der Ober- und/oder Unterseite, wobei die Gesamtfläche durch den Umriss der Ober- und/oder Unterseite bestimmt wird. Der Auflagebereich wird durch eine Profilierung (5) der Ober- und/oder Unterseite des Trittschallelementes (3) gebildet.

## Beschreibung

Die Erfindung betrifft ein Verfahren zur Herstellung eines Trittschallelementes nach dem Oberbegriff des Anspruches 1, eine Vorrichtung zur Durchführung eines solchen Verfahrens nach Anspruch 8 und ein Trittschallelement nach dem Oberbegriff des Anspruches 17.

Eine Trittschalldämmung entkoppelt den Fußboden von Gebäuden von der Decke. Für die Trittschalldämmung bekannt sind sog. schwimmende Estriche, die auf einer flexiblen Trittschalldämmschicht aufgebracht werden. Häufig verwendet werden hierfür Mineralwolle, Polystyrol- Hartschäume, Holzfasern, Kork und dgl.

Der Erfindung liegt die Aufgabe zugrunde, das gattungsgemäße Verfahren, die gattungsgemäße Vorrichtung und das gattungsgemäße Trittschallelement so auszubilden, dass die Trittschalldämmung in einfacher Weise erhöht werden kann.

Diese Aufgabe wird beim gattungsgemäßen Verfahren durch die kennzeichnenden Merkmale des Anspruches 1, bei der Vorrichtung erfindungsgemäß durch die Merkmale des Anspruches 8 und beim gattungsgemäßen Trittschallelement erfindungsgemäß mit den kennzeichnenden Merkmalen des Anspruches 17 gelöst.

Beim erfindungsgemäßen Verfahren wird das Trittschallelement an seiner Ober- und/oder seiner Unterseite mit einer Profilierung versehen. Infolge der Profilierung ergibt sich ein Auflagebereich für das Trittschallelement, der kleiner ist als die gesamte Fläche der Ober- und/oder Unterseite, wobei die Gesamtfläche durch den Umriss der Ober- und/oder Unterseite bestimmt wird. Durch den Auflagebereich wird die Übertragungsfläche des Trittschallelementes verringert, das nur noch mit dem Auflagebereich und nicht mehr mit seiner gesamten Ober- und/oder Unterseite an einer benachbarten Schicht anliegt.

Vorteilhaft wird die Profilierung durch einen Pressvorgang erzeugt. Durch die Verpressung des Trittschallelementes wird die dynamische Steifigkeit des Trittschallelementes verbessert, was zur Erhöhung der Trittschalldämmung in einfacher Weise führt. Der Pressvorgang lässt sich einfach und kostengünstig durchführen.

Der Pressvorgang kann statisch oder dynamisch erfolgen. Bei einer statischen Verfahrensweise ruht das Trittschalldämmung, während es quer zu seiner Erstreckung gepresst wird.

In diesem Falle wird das Trittschallelement in vorteilhafter Weise durch eine einzelne Platte gebildet, die in Dickenrichtung verpresst wird. Nach dem Pressvorgang ist es je nach Größe der Platte möglich, diese unmittelbar als Trittschalldämmplatte einzusetzen. Bei größeren Abmessungen ist es möglich, die verpresste Einzelplatte in zwei oder mehr Trittschallelemente aufzuteilen.

Bei einem dynamischen Pressvorgang wird das Material für den Trittschall als Strang dem Presswerkzeug zugeführt, welches den Strang beim Durchlauf verpresst und die Profilierung anbringt. Da der Strang als Endlosteil anzusehen ist, wird er nach dem Pressvorgang in einzelne Trittschallelemente aufgeteilt, die anschließend zur Trittschalldämmung eingebaut werden können.

Eine besonders vorteilhafte Verfahrensführung ergibt sich, wenn zumindest beim Pressvorgang das Material des Trittschallelementes erwärmt wird. Dann kann die Profilierung einfach und dennoch genau am Trittschallelement erzeugt werden.

In vorteilhafter Weise wird die Profilierung durch Erhöhungen am Trittschallelement gebildet, die über die Oberseite- und/oder Unterseite des Trittschallelementes verteilt, vorzugsweise gleichmäßig verteilt angeordnet sind. Mit den Erhöhungen liegt das Trittschallelement an benachbarten Schichten auf, wobei die Auflageflächen dieser Erhöhungen den Auflage-bereich des Trittschallelementes bilden. Im Bereich außerhalb der Erhöhungen hat das Trittschallelement Abstand von den benachbarten Schichten.

Die erfindungsgemäße Vorrichtung hat wenigstens ein Presswerkzeug, das mit einer Profilierschicht versehen ist. Mit der Profilierschicht des Presswerkzeuges wird an der Ober- und/oder Unterseite des Trittschallelementes die Profilierung angebracht.

Je nach der Verfahrensweise kann das Profilierwerkzeug unterschiedlich gestaltet sein. Bei einer statischen Verfahrensweise ist das Presswerkzeug vorteilhaft stempelförmig ausgebildet ist. Beim Pressvorgang wird das Presswerkzeug nach Art eines Stempels auf das plattenförmige Trittschallelement gedrückt, so dass dieses so verformt wird, dass mit der Profilierschicht des Presswerkzeuges die Profilierung an der Ober- und/oder Unterseite des Trittschallelementes erzeugt wird.

Hierbei ist es vorteilhaft möglich, dass das Presswerkzeug quer, vorzugsweise senkrecht zur Ober- bzw. Unterseite des Trittschallelementes bewegbar ausgebildet ist. Dann kann durch eine einfache Hubbewegung das Presswerkzeug in Kontakt mit dem Trittschallelement gebracht bzw. von ihm abgehoben werden.

Das Presswerkzeug kann aber auch vorteilhaft durch wenigstens eine Walze gebildet sein, die für den Pressvorgang um ihre Achse drehbar angetrieben wird. Dann kann unter der Walze der Materialstrang hindurchgeführt werden, aus dem die Trittschallelemente anschließend herausgetrennt werden können.

Bei einer bevorzugten Ausführung ist die Vorrichtung mit zwei Walzen versehen, die einen Walzenspalt begrenzen, durch welchen der Materialstrang zu Herstellung der Trittschallelemente gefördert wird. Der Walzenspalt lässt sich vorzugsweise in seiner Höhe einstellen, so dass er auf unterschiedlich dicke Stränge einfach eingestellt werden kann. Beim Durchgang durch den Walzenspalt wird das Material des Stranges verpresst und somit die dynamische Steifigkeit des Stranges bzw. abzutrennenden Trittschallelementes verbessert.

Bevorzugt weist zumindest die eine Walze eine Profilierschicht an ihrer Mantelfläche auf. Durch diese Profilierschicht wird an der Ober- und/oder Unterseite des Materialstranges für das Trittschallelement die Profilierung erzeugt. Der Walzenspalt wird hierbei so klein eingestellt, dass die Profilierschicht zuverlässig die Profilierung am Materialstrang anbringen kann.

Eine Verbesserung der Erzeugung der Profilierung kann dadurch erreicht werden, dass die Mantelfläche der Walze beheizbar ist. Dann kann das Strangmaterial beim Pressvorgang erwärmt werden, wodurch die Erzeugung der Profilierung erleichtert und verbessert werden kann.

Um die Profilierung am Trittschallelement anzubringen, kann die Profilierschicht des jeweiligen Presswerkzeuges als Negativ- oder als Positivprofil der herzustellenden Profilierung des Trittschallelementes ausgebildet sein.

Vorteilhaft besteht das Trittschallelement aus EPS. Als EPS können die verschiedenen EPS-Qualitäten eingesetzt werden, mit denen eine gewünschte Trittschalldämmung erreicht werden kann. Selbstverständlich kommen als Material für das Trittschallelement auch andere geeignete Werkstoff in Betracht, an denen mit dem Presswerkzeug eine Profilierung angebracht werden kann.

Das erfindungsgemäße Trittschallelement zeichnet sich dadurch aus, dass es an seiner Ober- und/oder Unterseite mit der Profilierung versehen ist. Sie führt zu einem Auflagebereich, der kleiner ist als die durch die Außenabmessungen des flächenförmigen Trittschallelementes bestimmte Gesamtfläche der Ober- bzw. Unterseite des Trittschallelementes.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsformen näher erläutert. Es zeigt:
- Fig. 1: in schematischer Darstellung eine erste Ausführungsform eines erfindungsgemäßen Presswerkzeuges,
- Fig. 2: in einer Darstellung entsprechend Fig. 1 eine zweite Ausführungsform eines erfindungsgemäßen Presswerkzeuges,
- Fig. 3: in schematischer Darstellung einen Pressvorgang unter Verwendung des Presswerkzeuges gemäß Fig. 2,
- Fig. 4: in schematischer Darstellung eine dritte Ausführungsform eines erfindungsgemäßen Presswerkzeuges,
- Fig. 5: eine Draufsicht auf eine mit dem erfindungsgemäßen Presswerkwerkzeug verpresste Platte,
- Fig. 6: in schematischer Darstellung einen Schnitt durch einen Fußboden eines Gebäudes mit einer verpressten Platte gemäß Fig. 5.

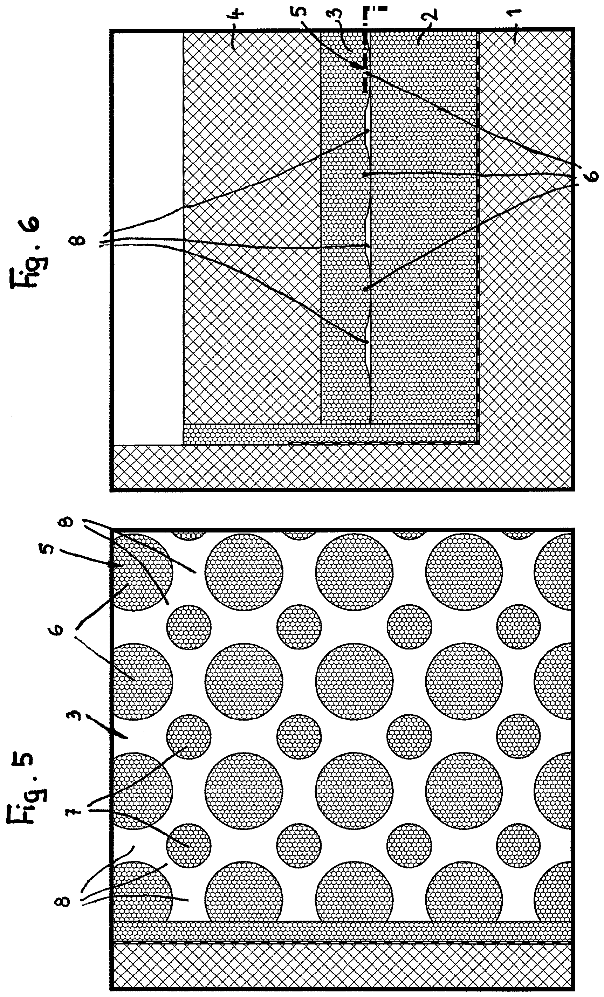

Die Fig. 5 und 6 zeigen einen beispielhaften Aufbau eines Fußbodens eines Gebäudes. Auf einer Tragschicht 1, vorzugsweise einer Betonschicht, liegt eine Wärmedämmschicht 2 auf, die aus jedem geeigneten Material bestehen kann. Die Wärmedämmschicht 2 dient als Auflage für eine Trittschallschicht 3, die vorteilhaft aus EPS besteht. Die Trittschallschicht 3 kann aber auch aus jedem anderen geeigneten Material bestehen, mit dem eine Trittschalldämmung erreicht werden kann.

Auf die Trittschallschicht 3 ist ein Estrich 4 aufgebracht, der als Unterlage für einen (nicht dargestellten) Bodenbelag dient.

Damit eine besonders wirksame Trittschalldämmung erreicht wird, wird die Trittschallschicht 3 vor ihrem Einbau einem Pressvorgang unterworfen, wobei die Trittschallschicht 3 an zumindest einer Seite mit einer entsprechenden Profilierung versehen wird. In Fig. 6 ist die Profilierung 5 an der der Wärmedämmschicht 2 zugewandten Oberseite vorgesehen. Die Profilierung 5 kann auch an der dem Estrich 4 zugewandten Oberseite der Trittschallschicht 3 vorhanden sein. Es ist darüberhinaus auch möglich, die Profilierung 5 auf beiden Oberseiten anzubringen.

Die Profilierung 5 führt dazu, dass die Trittschallschicht 3 nicht über ihre gesamte Fläche an der Wärmedämmschicht 2 anliegt. Durch die Profilierung 5 wird erreicht, dass der Teil der Oberfläche, der an der Wärmedämmschicht 2 anliegt, wesentlich verringert wird.

Wie aus Fig. 5 hervorgeht, wird die Profilierung 5 beispielhaft durch Erhöhungen 6, 7 gebildet, die jeweils mit Abstand zueinander liegen. Bei der beispielhaften Ausführungsform gemäß Fig. 5 haben die Erhöhungen 6 größeren Durchmesser als die Erhöhungen 7.

Diese Gestaltung der Profilierung 5 ist nur als Beispiel zu verstehen, nicht jedoch als einschränkende Maßnahme. Die Erhöhungen 6, 7 können auch gleichen Durchmesser haben. Ebenso ist es möglich, den Erhöhungen anstelle der runden beispielsweise auch eine eckige Umrissform zu verleihen. Grundsätzlich sind alle Umrissformen für die Erhöhungen 6, 7 möglich, um eine wirksame Trittschalldämmung zu erreichen.

Zwischen den Erhöhungen 6, 7 werden Vertiefungen 8 gebildet, in deren Bereich die Trittschallschicht 3 Abstand von der Wärmedämmschicht 2 hat.

Wie aus Fig. 6 hervorgeht, liegt die Trittschallschicht 3 lediglich mit den Erhöhungen 6, 7 auf der Wärmedämmschicht 2 auf. Aufgrund der Vertiefungen 8 wird die Übertragungsfläche zwischen der Wärmedämmschicht 2 und der Trittschallschicht 3 erheblich verringert, was zur guten Trittschalldämmung beitritt.

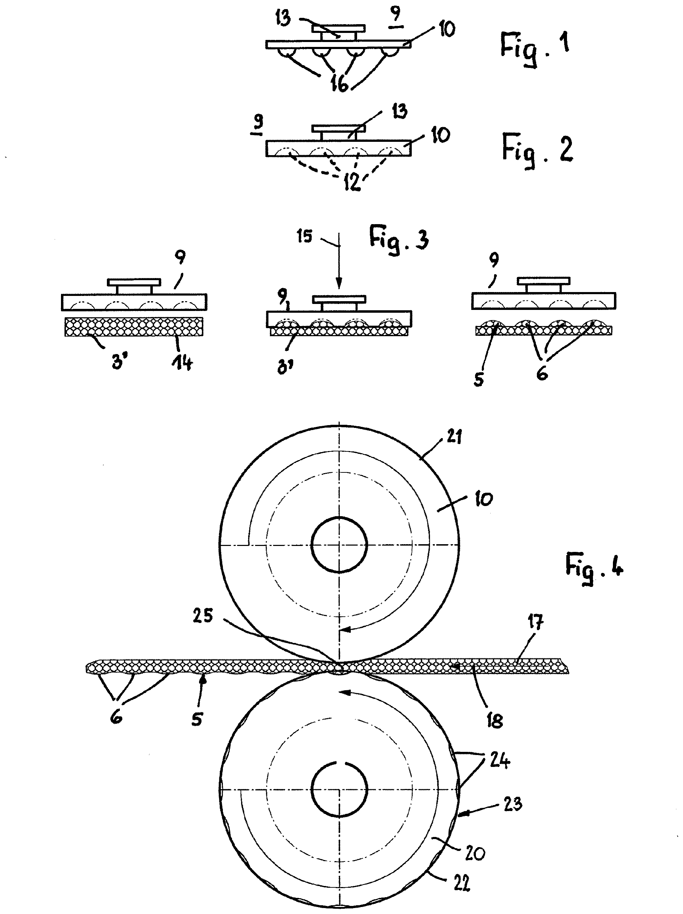

Um die Profilierung 5 an der Trittschallschicht 3 vorzusehen, werden Presswerkzeuge eingesetzt, wie sie in den Fig. 2 und 4 dargestellt sind.

Das Presswerkzeug 9 gemäß Fig. 2 hat wenigstens einen plattenförmigen Träger 10, der an seiner Unterseite mit einer Profilierschicht 11 versehen ist. Sie weist über ihre Fläche verteilt angeordnete Vertiefungen 12 auf, die mit Abstand hinter- und nebeneinander liegen und die beim noch zu beschreibenden Pressvorgang die Erhöhungen 6, 7 der Trittschallschicht 3 erzeugen.

An der der Profilierschicht 11 gegenüberliegenden Seite ist das Presswerkzeug 9 mit wenigstens einem Halter 13 versehen, mit dem das Presswerkzeug 9 in geeigneter Weise gehalten wird.

Anhand von Fig. 3 wird ein beispielhafter Pressvorgang mit Hilfe des Presswerkzeuges 9 erläutert.

Als Trittschallschicht 3 wird eine EPS-Platte 3' verwendet, die auf einer Unterlage 14 aufliegt. Die Platte 3' wird unter das Presswerkezug 9 transportiert, das sich hierbei in einer Ausgangsstellung befindet, in der es Abstand von der Platte 3' hat. Sobald die Platte 3' ihre Bearbeitungslage eingenommen hat, wird das Presswerkzeug 9 nach unten gegen die Platte 3' bewegt, die durch das Presswerkzeug 9 zusammengedrückt wird (mittleres Bild der Fig. 3). Auf das Presswerkzeug 9 wird eine Presskraft 15 aufgebracht, die senkrecht zur Platte 3' verläuft. Beim Pressvorgang wird die Platte 3' zusammengedrückt, wobei durch die Profilierschicht 11 an der Oberseite der Platte 3' das Profil 5 erzeugt wird. Beim Pressvorgang wird das Material der Platte 3' in die Vertiefungen 12 der Profilschicht 11 verdrängt, wodurch an der Oberseite der Platte 3' die Erhöhungen 6, 7 erzeugt werden.

Nach dem Pressvorgang wird das Presswerkzeug 9 zurückgefahren und von der Platte 3' abgehoben (rechte Abb. in Fig. 3). Die Platte 3' entspannt sich teilweise, so dass ihre Dicke wieder zunimmt. Die Erhöhungen 6, 7 an der Oberseite der Platte 3' werden hiervon nicht beeinflusst. Durch das Presswerkzeug 9 wird beim Pressvorgang (mittlere Abb. der Fig. 3) ein so hoher Druck auf die Platte 3' ausgeübt, dass die Erhöhungen 6, 7 plastisch verformt bleiben, wenn das Presswerkzeug 9 von der Platte 3' abgehoben wird.

Die Verpressung der Platte 3' führt zu einer Verbesserung der dynamischen Steifigkeit der Platte 3' und damit zu einer entsprechend hohen Verbesserung der Trittschalldämmung.

Fig. 1 zeigt ein Presswerkzeug 9, bei dem an der Unterseite des wenigstens einen plattenförmigen Trägers 10 mit Abstand voneinander liegende Erhöhungen 16 angeordnet sind, die beispielhaft halbkalottenförmig ausgebildet sind. Im Unterschied zum Presswerkzeug 9 erzeugen die Erhöhungen 16 in der Oberseite der Schicht 3' entsprechende Vertiefungen. Dann verbleiben zwischen den Vertiefungen der Platte 3' Stegbereiche, mit denen die Platte 3' anschließend auf der Wärmedämmschicht 2 aufliegt. Auch auf diese Weise wird an der Oberseite der Platte 3' eine Profilierung 5 erzeugt, die zu einer verringerten Übertragungsfläche führt, wodurch eine hohe Verbesserung der Trittschalldämmung erreicht wird. Durch die Verpressung wird ebenfalls die dynamische Steifigkeit der Platte 3' verbessert.

Die beiden Presswerkzeuge gemäß den Fig. 1 und 2 unterscheiden sich somit nur dadurch voneinander, dass beim Presswerkzeug 9 nach Fig. 1 ein positives und beim Presswerkzeug 9 gemäß Fig. 2 ein negatives Profil vorgesehen ist, um die entsprechende Oberseite der Schicht 3' mit der entsprechenden Profilierung zu versehen.

Wie aus Fig. 3 hervorgeht, erfolgt die Pressung der Platte 3' statisch, d.h. die Platte 3' ruht während des Pressvorganges.

Es ist mit dem Presswerkzeug 9 grundsätzlich auch möglich, die Verpressung der Platte 3' auch dann vorzunehmen, wenn diese auf der Unterlage 14 transportiert wird. Diese Pressung kann beispielhaft dadurch erreicht werden, dass das Presswerkzeug 9 mit seinem Halter 13 an einer umlaufenden Kette einer Kettentransportvorrichtung montiert ist. In diesem Fall bewegt sich das Presswerkzeug 9 beim Pressvorgang zusammen mit der auf der Unterlage 14 sich bewegenden Platte 3'.

Eine solche Kettentransportvorrichtung erstreckt sich mit Abstand oberhalb der Unterlage 14 und hat eine solche Länge, dass mehrere Presswerkzeuge 9 an der umlaufenden Kette befestigt werden können, so dass die Schichten 3' nacheinander auf der Unterlage 14 transportiert und hierbei gepresst werden können.

Fig. 4 zeigt ein Beispiel für eine dynamische Pressung. In diesem Falle wird als Schicht nicht eine einzelne Platte herangezogen, sondern ein durchgehender Strang 17, der in Transportrichtung 18 durch eine Anlage transportiert werden kann. Im bevorzugten Ausführungsbeispiel wird der Strang 17 durch geschäumtes EPS gebildet, der zwischen zwei gegensinnig zueinander drehenden Walzen 19, 20 transportiert wird.

Die beiden Walzen 19, 20 haben vorteilhaft gleichen Durchmesser. Die in Fig. 4 obere Walze 19 hat einen glatten Mantel 21, während der Mantel 22 der unteren Walze 20 mit einer Profilierschicht 23 versehen ist. Sie hat über den Umfang und die axiale Breite der Walze 20 verteilt angeordnete Vertiefungen 24, die ähnlich den Vertiefungen 12 des Presswerkzeuges 9 gemäß Fig. 2 Abstand voneinander haben.

Die beiden Walzen 19, 20 werden derart drehbar angetrieben, dass die Drehrichtung im Kontaktbereich mit dem Strang 17 gleich verläuft wie die Transportrichtung 18 des Stranges 17.

Der Walzenspalt 25 zwischen den beiden Walzen 19, 20 ist so eingestellt, dass der Strang 17 beim Durchgang durch den Walzenspalt 25 zusammengedrückt wird. Hierbei ist der Walzenspalt 25 so eingestellt, dass das Material des Stranges 17 in die Vertiefungen 24 der Walze 20 gedrückt wird, wodurch nach dem Durchgang durch den Walzenspalt 25 an der entsprechenden Seite des Stranges 17 die Erhöhungen 6, 7 gebildet werden.

Die Walze 19 mit dem Plattenmantel 21 sorgt dafür, dass das Material des Stranges 17 im Walzenspalt 25 so fest zusammengedrückt werden kann, dass das Material des Stranges 17 in die Vertiefungen 24 der Walze 20 gedrückt wird.

Bei einer anderen Ausführungsform kann auch die Walze 19 mit der Profilierschicht 23 versehen sein. Dann werden auf beiden Seiten des Stranges 17 die Erhöhungen 6, 7 erzeugt.

Es kann auch nur die obere Walze 19 mit der Profilierschicht 23 versehen werden, während die untere Walze eine glatte Mantelfläche hat. Dann wird an der Oberseite des Stranges 17 die Profilierung mit den Erhöhungen 6, 7 gebildet.

Diese Verfahrensweise hat den Vorteil, dass der Strang 17 kontinuierlich verpresst werden kann. Nach dem Durchgang durch den Walzenspalt 25 können aus dem Strang 17 die einzelnen Platten 3' in der erforderlichen Länge bzw. Breite abgetrennt werden.

Die Transportgeschwindigkeit des Stranges 17 und dementsprechend die Drehgeschwindigkeit der Walzen 19, 20 wird so gewählt, dass beim Durchgang durch den Walzenspalt 25 eine sichere Verpressung und damit Erzeugung der Erhöhungen 6, 7 erreicht wird.

Die Presswerkzeuge 9, 19, 20 können zumindest an der Pressseite beheizbar ausgebildet sein, so dass das Material der Schicht 3' bzw. des Stranges 17 während des Pressvorganges erwärmt wird. Dies erleichtert die Erzeugung der Profilierung der Oberseite der Platte 3' bzw. des Stranges 17.

Auch ist es möglich, für den Pressvorgang die Schicht 3' bzw. den Strang 17 zu erwärmen, was ebenfalls die Herstellung der Profilierung 5 an der Platte 3' bzw. am Strang 17 begünstigt.

Zudem wird durch die Erwärmung des Presswerkzeuges 9, 19, 20 und/oder Platte 3' bzw. des Stranges 17 die Leistungsfähigkeit der entsprechenden Anlage erhöht.

Das zu behandelnde Trittschallelement 3 kann auch in Rollenform vorliegen. Nach der Herstellung der Profilierung 5 können von der Rolle die Trittschallelemente in der erforderlichen Länge abgetrennt werden.

Auch können von der Rolle zunächst die Trittschallelemente abgetrennt und anschließend mit der Profilierung 5 versehen werden.

Es ist ferner möglich, die Profilierung 5 bereits bei der Herstellung des Trittschallelementes in einer Form anzubringen.

## Patentansprüche

1. Verfahren zur Herstellung eines plattenförmigen Trittschallelementes (3, 3'), das eine Oberseite und eine Unterseite aufweist,
**dadurch gekennzeichnet, dass** das Trittschallelement (3, 3') an seiner Ober- und/oder seiner Unterseite einen Auflagebereich aufweist, der kleiner ist als die Gesamtfläche der Ober- und/oder Unterseite, wobei die Gesamtfläche durch den Umriss der Ober- und/oder Unterseite bestimmt wird, und dass der Auflagebereich durch eine Profilierung (5) der Ober- und/oder Unterseite des Trittschallelementes (3, 3') gebildet wird.

2. Verfahren nach Anspruch 1,
**dadurch gekennzeichnet, dass** die Profilierung (5) durch einen Pressvorgang erzeugt wird.

3. Verfahren nach Anspruch 2,
**dadurch gekennzeichnet, dass** der Pressvorgang statisch oder dynamisch erfolgt.

4. Verfahren nach Anspruch 2 oder 3,
**dadurch gekennzeichnet, dass** eine einzelne Platte (3') als Trittschallelement (3') verpresst wird.

5. Verfahren nach Anspruch 2 oder 3,
**dadurch gekennzeichnet, dass** ein Strang (17) kontinuierlich verpresst wird, und dass aus dem verpressten Strang (17) das Trittschallelement (3) herausgetrennt wird.

6. Verfahren nach einem der Ansprüche 2 bis 5,
**dadurch gekennzeichnet, dass** zumindest beim Pressvorgang das Material des Trittschallelementes (3, 3') erwärmt wird.

7. Verfahren nach einem der Ansprüche 1 bis 6,
**dadurch gekennzeichnet, dass** die Profilierung (5) durch Erhöhungen (6, 7) am Trittschallelement (3, 3') gebildet wird, die über die Oberseite und/oder die Unterseite des Trittschallelementes verteilt, vorzugsweise gleichmäßig verteilt angeordnet sind.

8. Vorrichtung zur Durchführung des Verfahrens nach einem der Ansprüche 1 bis 7, mit wenigstens einem Presswerkzeug (9, 19, 20), das mit einer Profilierschicht (11, 23) versehen ist.

9. Vorrichtung nach Anspruch 8,
**dadurch gekennzeichnet, dass** das Presswerkzeug (9) stempelförmig ausgebildet ist.

10. Vorrichtung nach Anspruch 8 oder 9,
**dadurch gekennzeichnet, dass** das Presswerkzeug quer, vorzugsweise senkrecht zur Ober- bzw. Unterseite des Trittschallelementes (3, 3') bewegbar ist.

11. Vorrichtung nach Anspruch 8,
**dadurch gekennzeichnet, dass** das Presswerkzeug (19, 20) durch wenigstens eine Walze gebildet ist.

12. Vorrichtung nach Anspruch 11,
**dadurch gekennzeichnet, dass** zwei Walzen (19, 20) vorgesehen sind, die einen Walzenspalt (25) begrenzen, dessen Höhe vorteilhaft einstellbar ist.

13. Vorrichtung nach Anspruch 12,
**dadurch gekennzeichnet, dass** zumindest die eine Walze (19, 20) eine Profilierschicht (23) an ihrer Mantelfläche (21, 22) aufweist.

14. Vorrichtung nach einem der Ansprüche 11 bis 13,
**dadurch gekennzeichnet, dass** die Mantelfläche (21, 22) der Walze (19, 20) beheizbar ist.

15. Vorrichtung nach einem der Ansprüche 8 bis 14,
**dadurch gekennzeichnet, dass** die Profilierschicht (11, 12) das Negativ- oder das Positivprofil der Profilierung (5) des Trittschallelementes (3, 3') bildet.

16. Vorrichtung nach einem der Ansprüche 8 bis 15,
**dadurch gekennzeichnet, dass** das Trittschallelement (3, 3') aus EPS besteht.

17. Trittschallelement mit einer Ober- und einer Unterseite,
**dadurch gekennzeichnet, dass** die Ober- und/oder die Unterseite mit einer Profilierung (5) versehen ist, die einen Auflagebebereich des Trittschallelementes (3, 3') bildet.

18. Trittschallelement nach Anspruch 17,
**dadurch gekennzeichnet**, die Profilierung (5) über die Ober- und/oder Unterseite des Trittschallelementes (3, 3') gleichmäßig verteilt angeordnet ist.
